# EUROPÄISCHE PATENTSCHRIFT

(11) **EP 1 787 847 B1**
(45) Veröffentlichungstag und Bekanntmachung des Hinweises auf die Patenterteilung: **14.10.2009**
(21) Anmeldenummer: 06123244.3
(22) Anmeldetag: 31.10.2006
(51) Int. Cl.: B60K 31/00, B60W 40/04, G01S 11/12, G06T 7/00

(54) **Fahrerassistenzsystem mit Abstandserfassung**
Driver assistance system comprising distance to obstacle detection
Système d'assistance avec détermination de la distance entre le véhicule et un obstacle

(30) Priorität: 21.11.2005 DE 102005055347
(43) Veröffentlichungstag der Anmeldung: 23.05.2007
(73) Patentinhaber: ROBERT BOSCH GMBH, 70442 Stuttgart (DE)
(72) Erfinder: Sparbert, Jan, 71272 Renningen (DE)

(56) Entgegenhaltungen:
- EP-A1- 1 455 323
- WO-A2-03/093857
- DE-A1- 3 106 100
- DE-A1- 19 600 059
- DE-A1-102005 016 288
- FR-A1- 2 646 383
- JP-A- 11 044 533
- US-A1- 2002 057 195
- YOUNG E ET AL: "Improved obstacle detection by sensor fusion" IEE COLLOQUIUM ON "PROMETHEUS AND DRIVE", 1992, Seiten 2-1, XP006521317

## Beschreibung

### Stand der Technik

Die Erfindung betrifft ein Fahrerassistenzsystem nach dem Oberbegriff des Anspruchs 1 sowie ein Verfahren für die Bestimmung des Objektabstands nach dem Oberbegriff des Anspruchs 5.

Fahrerassistenzsysteme der gattungsgemäßen Art erleichtern dem Fahrer eines Fahrzeugs dessen Führung, insbesondere bei schlechten Witterungsbedingungen. Sie ermöglichen weiterhin Komfortfunktionen, die den Fahrer bei der Einhaltung der gewählten Fahrspur und/oder der Einhaltung des Sicherheitsabstands zu vorausfahrenden Fahrzeugen unterstützen. Bekannte Fahrerassistenzsysteme verfügen dazu über eine Mehrzahl von Sensoren, die Informationen aus dem Umfeld des Fahrzeugs nach unterschiedlichen physikalischen Prinzipien erfassen.

Aus DE 103 24 895 A1 ist beispielsweise ein Fahrerassistenzsystem bekannt, das eine Videokamera und einen Radarsensor umfasst. Der zu einem ACC-System gehörende Radarsensor ermöglicht eine genauere Entfernungsbestimmung der von dem Videosensor erfassten Objekte. Da der Erfassungsbereich eines derartigen Radarsensors jedoch nur einen vergleichsweise engen Winkelbereich abdeckt, kann der Radarsensor außerhalb seines Erfassungsbereichs nicht zu einer exakten Entfernungsbestimmung der von dem Videosensor dort noch erfassten Objekte beitragen.

Aus der DE 31 06 100 A1 ist eine Hindemiswarnvorrichtung für Luft-Raum- oder Wasserfahrzeuge bekannt. Die Hinderniswarnvorrichtung umfasst ein Radargerät, eine Kamera und einen Farbmonitor. Die WO 03/093857 A2 offenbart ein Objekterkennungssystem für Fahrzeuge. Das Objekterkennungssystem umfasst einen Bildsensor und eine Steuereinheit. Aus der FR 2 646 383 A1 ist eine Vorrichtung zur Erkennung von Hindernissen für Kraftfahrzeuge bekannt.

### Vorteile der Erfindung

Die vorliegende Erfindung gemäß den Ansprüchen ermöglicht eine weitere Verbesserung bekannter Fahrerassistenzsysteme, indem sie eine Entfernungsbestimmung von erfassten Objekten ermöglicht, deren Entfernung mit den Sensoren des Fahrerassistenzsystems nicht messtechnisch erfasst werden kann. Die Erfindung geht dabei von der Erkenntnis aus, dass die Bestimmung der Entfernung eines erfassten Objekts aus seiner relativen Zeilenlage in einem aus den Daten der Umfeldsensoren abgeleiteten Bild des Fahrzeugumfelds möglich ist, wenn zuvor eine Skalierung der Bildzeilen hinsichtlich von Entfernungswerten durchgeführt worden ist. Diese Skalierung erfolgt vorteilhaft dadurch, dass zunächst mindestens ein Objekt und seine Entfernung mit einem Entfernungen messenden Umfeldsensor erfasst wird. Diesem Objekt entsprechende Bildzeilen des Bildes des Fahrzeugumfelds repräsentieren dann Entfernungswerte, die auf andere Objekte übertragbar sind. Besonders vorteilhaft sind als Umfeldsensoren ein Radarsensor und ein Videosensor vorgesehen, wobei der Radarsensor auch die Entfernung von Objekten erfasst.

### Zeichnung

Ausführungsbeispiele der Erfindung sind in den Zeichnungen dargestellt und in der nachfolgenden Beschreibung näher erläutert.

Es zeigen:
- Figur 1: ein ein Fahrerassistenzsystem umfassendes Fahrzeug in Seitenansicht;
- Figur 2: eine Aufsicht auf ein Fahrzeug mit Darstellung der Erfassungsbereiche von Umfeldsensoren des Fahrzeugs;
- Figur 3: die Darstellung von Objekten auf einem Display;
- Figur 4: eine Aufsicht auf ein Fahrzeug mit Darstellung der Erfassungsbereiche von Umfeldsensoren des Fahrzeugs;
- Figur 5: die Abbildung eines mit einem Weitwinkelobjektiv aufgenommenen Objekts;
- Figur 6: die rektifizierte Abbildung eines Objekts;
- Figur 7: die Zuordnung eines Abstandswerts zu einer Bildzeile;
- Figur 8: eine Abbildung des Fahrzeugumfelds mit einer tief liegenden Horizontlinie;
- Figur 9: eine Abbildung des Fahrzeugumfelds mit einer hoch liegenden Horizontlinie;
- Figur 10: eine Darstellung von in der Entfernung gestaffelten Objekten;
- Figur 11: eine schematische Seitenansicht von sich aus Sensors überdeckenden Objekten;
- Figur 12: ein Ablaufdiagramm.

### Beschreibung der Ausführungsbeispiele

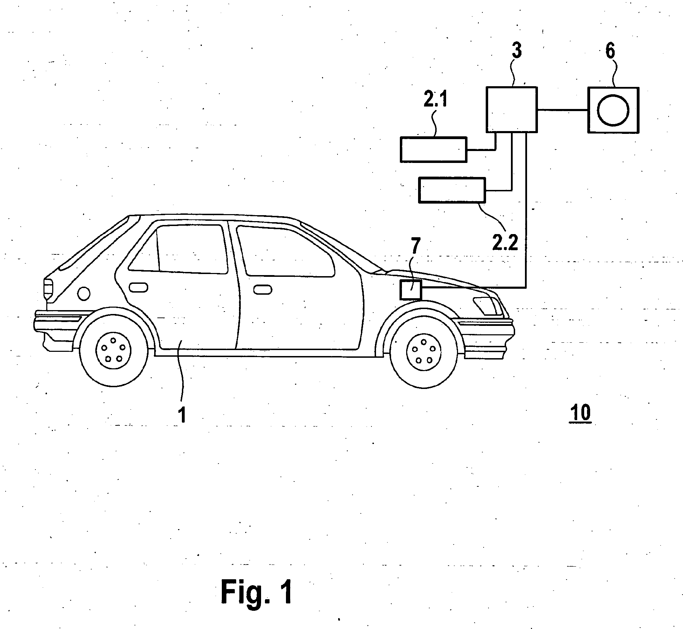

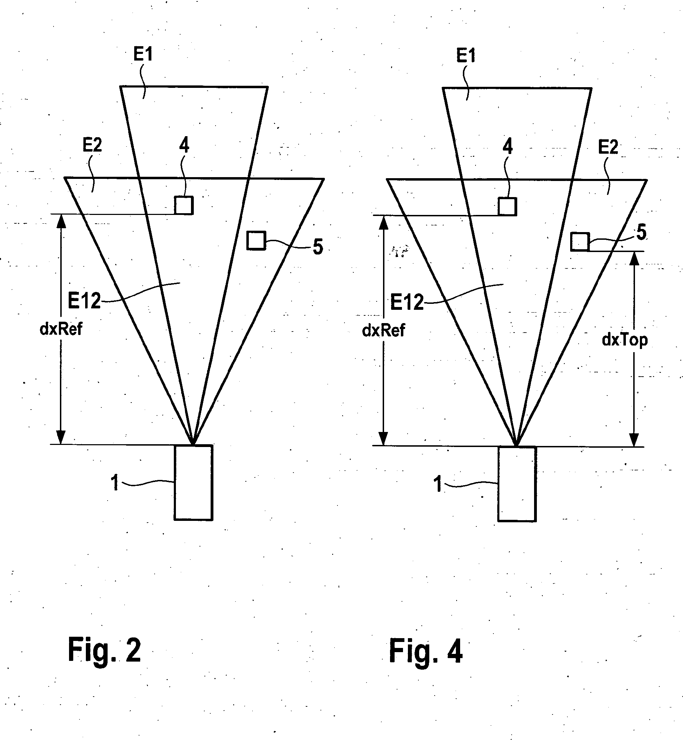

Aktuell bereits in Serie eingesetzte Fahrerassistenzsysteme, wie beispielsweise ACC und PSS beruhen fast ausschließlich auf der Nutzung nur eines einzigen Umfeldsensors, beispielsweise eines Radarsensors, der in der Lage ist, Entfernungen zu anderen Objekten mit relativ großer Genauigkeit zu messen. In Planung befindliche Fahrerassistenzsysteme werden weitere Umfeldsensoren, wie insbesondere Nahbereichsradar, Videosensoren, Lidar, umfassen. Die von den unterschiedlichen Umfeldsensoren gelieferten Daten werden dabei in einem Steuergerät ausgewertet. Das Steuergerät generiert aus diesen Daten Steuersignale, die verschiedenen Systemen des Fahrzeugs, wie beispielsweise dem Antriebsstrang, dem Bremssystem, dem Lenksystem, dem Abstandskontrollsystem, dem Rückhaltesystem, zugeleitet werden. Optional können die Daten auch in einer für den Fahrer leicht erfassbaren Art auf einem Display dargestellt werden. Dabei kann beispielsweise ein möglichst genaues Abbild des Fahrzeugumfelds bereitgestellt werden. Eine besonders viel versprechende Sensoranordnung (Figur 1) umfasst als Umfeldsensoren mindestens einen Radarsensor 2.1 und mindestens einen Videosensor 2.2, die als so genannte vorausschauende Sensoren in dem Frontbereich eines Fahrzeugs 1 angeordnet sind. Die Sensoren 2.1, 2.2 sind mit einem Steuergerät 3 verbunden, das die Signale der Sensoren 2.1, 2.2 auswertet und Steuersignale für verschiedene Systeme des Fahrzeugs 1, wie beispielsweise Antriebsstrang, Bremssystem, Abstandsregelungssystem, Lenksystem, Rückhaltesystem, bereitstellt. Diese Systeme sind in Figur 1 nur schematisch angedeutet und mit der Bezugsziffer 7 bezeichnet. Das Steuergerät 3 ist weiterhin mit einem Display 6 verbunden, das die Umfelddaten in einer für den Fahrer leicht erfassbaren Darstellung sichtbar macht. In Figur 2 ist eine Aufsicht auf das verkleinert dargestellte Fahrzeug 1 gezeigt. Zusätzlich ist eine Projektion der Erfassungsbereiche E1, E2 der Sensoren 2.1, 2.2 auf die Bildebene eingetragen. Der Erfassungsbereich E1 ist dem Radarsensor 2.1 zugeordnet. Der Erfassungsbereich E2 ist dem Videosensor 2.2 zugeordnet. Unter Erfassungsbereich im Sinne der vorliegenden Erfindung ist derjenige Bereich aus dem Umfeld des Fahrzeugs 1 zu verstehen, in dem der jeweilige Sensor 2.1,2.2 noch zuverlässig Objekte erfasst. Wie eingangs bereits erwähnt, reicht der Erfassungsbereich E1 eines Radarsensors 2.1 weiter als der Erfassungsbereich E2 eines Videosensors 2.2, ist jedoch auf einen kleineren Raumwinkel beschränkt. Der Erfassungsbereich E2 eines Videosensors 2.2 hat zwar in der Regel eine kürzere Reichweite, kann jedoch Objekte aus einem größeren Raumwinkel erfassen. Mit einem lediglich Monobilder erfassenden Videosensor 2.2 ist es weiterhin nicht ohne weiteres möglich, die Entfernung eines Objekts in dem Erfassungsbereich zu bestimmen. Diesen Vorteil bietet dagegen der Radarsensor 2.1, der es ermöglicht, die Entfernung eines Objekts in seinem Erfassungsbereich mit relativ hoher Genauigkeit zu bestimmen. Eine besonders vorteilhafte Lösungsvariante ist daher die Kombination mindestens eines Radarsensors 2.1 und mindestens eines Videosensors 2.2, die derart an dem Fahrzeug 1 angeordnet sind, dass ihre Erfassungsbereiche E1, E2 sich zumindest teilweise überlappen. Dieser Überlappungsbereich der Erfassungsbereiche E1, E2 ist in dieser Beschreibung und in der Zeichnung mit E12 bezeichnet.

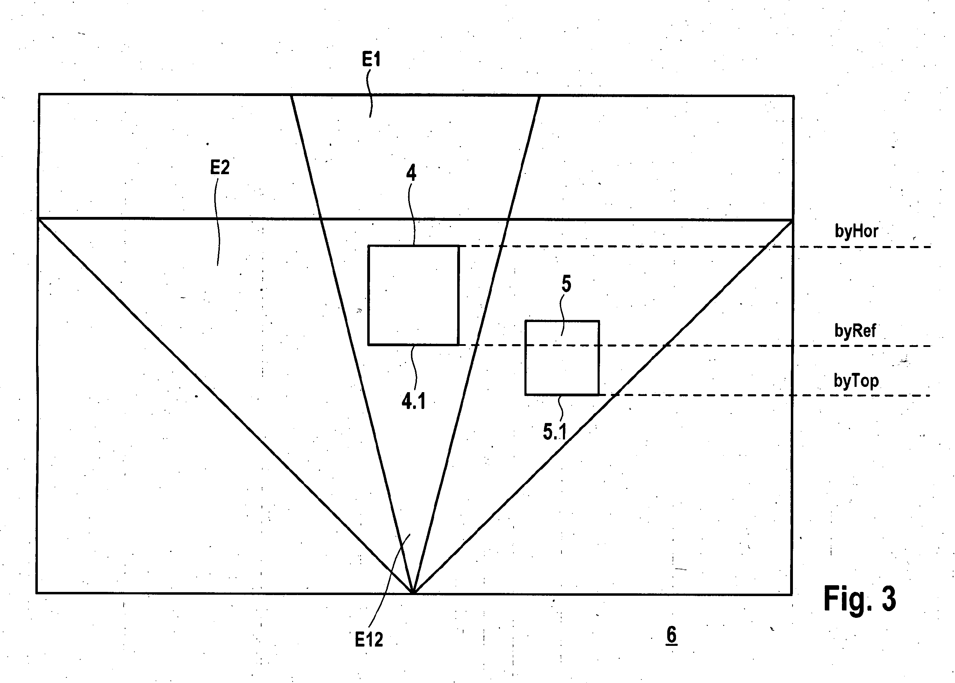

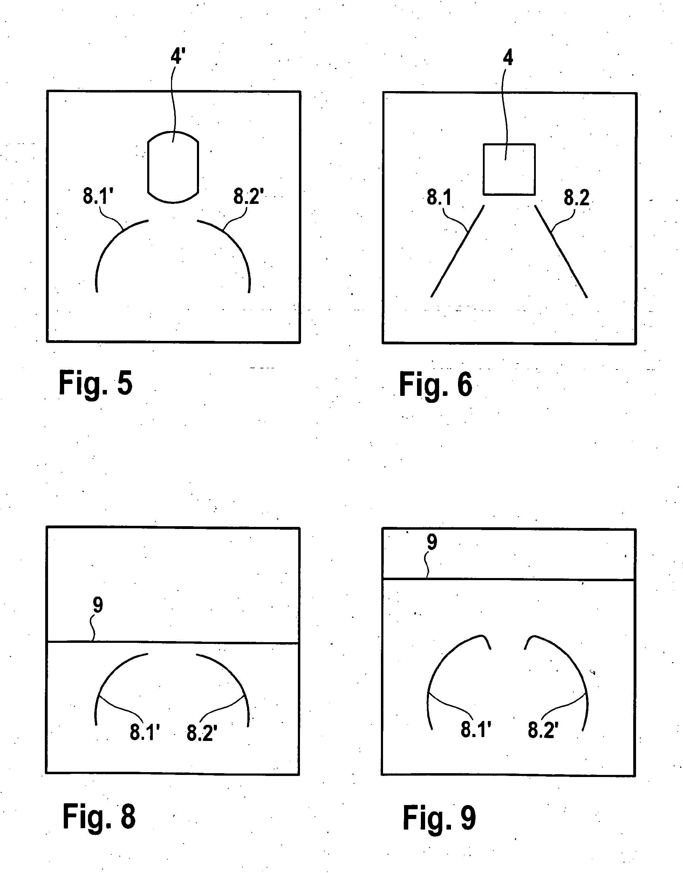

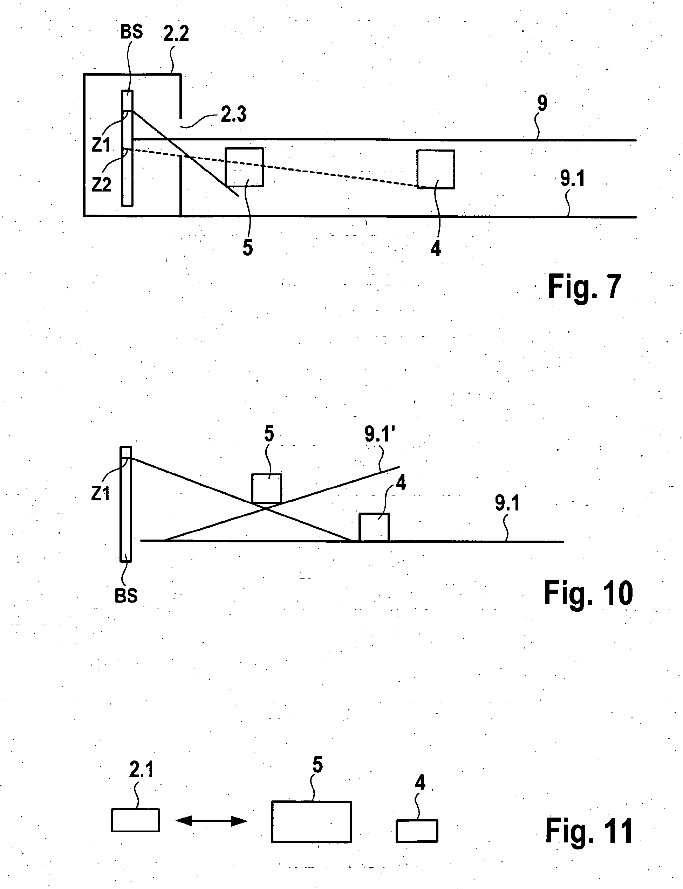

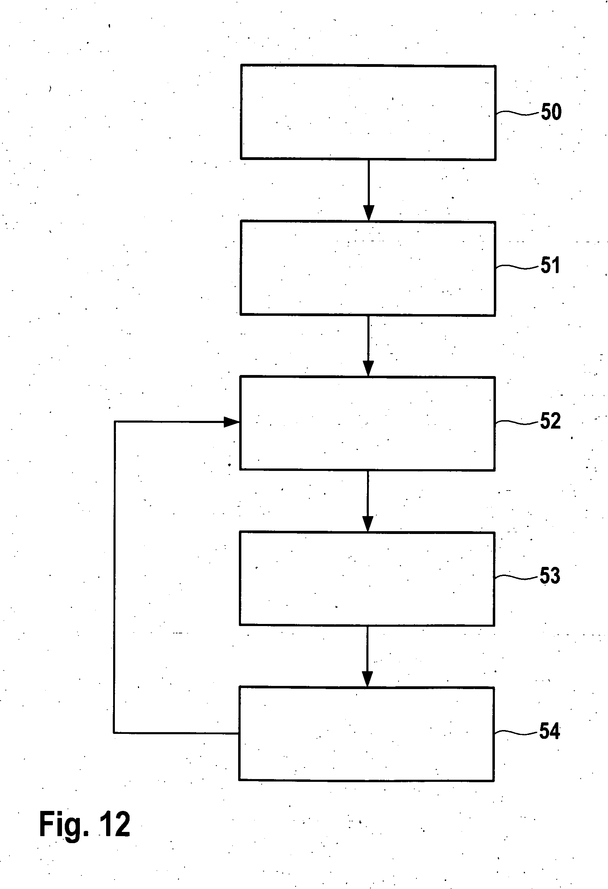

In der Fachsprache wird der Erfassungsbereich E1 des Sensors 2.1 häufig auch als MOV-Bereich (Mono Object Verification) bezeichnet. MOV-Bereich bedeutet sinngemäß, dass ein Monosensor für die Bestätigung bzw. Identifizierung eines von einem anderen Sensor gemessenen Objekts aus diesem Bereich benutzt wird. Der Erfassungsbereich des Sensors 2.2 wird mit MOD-Bereich (Mono Object Detection) bezeichnet. MOD-Bereich bedeutet sinngemäß die eigenständige Erfassung eines Objekts mit einem Monosensor. Wie Figur 2 zeigt, überdecken sich die Erfassungsbereiche E1, E2, nur teilweise in einem Überlappungsbereich E12 in der Nachbarschaft der Längsachse des Fahrzeugs 1. In diesem Bereich E12 kann ein Objekt 4 zugleich von den Sensoren 2.1 und 2.2 detektiert werden. Auf diese Weise können einem mittels Radarsensor 2.1 detektierten Objekt 4 zusätzliche Attribute zugeordnet werden, die von dem Videosensor 2.2 erfasst werden. Andererseits können einem mit dem Videosensor 2.2 erfassten Objekt Eigenschaften, wie beispielsweise seine Entfernung von dem Fahrzeug 1, zugeordnet werden, die mit dem Radarsensor 2.1 erfasst worden sind. Hierdurch können vorteilhaft Ressourcen bei der Objekterkennung mittels des Videosensors 2.2 eingespart werden, da der Suchbereich in dem von dem Videosensor 2.2 abgedeckten Erfassungsbereich E2 auf das jeweils von dem Radarsensor 2.1 erfasste Objekt 4 beschränkt werden kann. Da es durch die Messung des Radarsensors 2.1 bereits schon Hinweise auf ein Objekt 4 in dem Überlappungsbereich E12 der Erfassungsbereiche E1,E2 gibt, können vorteilhaft weiterhin den Sensoren 2.1 und 2.2 zugeordnete Detektionsschwellen herabgesetzt werden. Dies führt dazu, dass ein Objekt aus dem Erfassungsbereich E1, E2 eher erkennbar ist. Dies wiederum ermöglicht dem Fahrerassistenzsystem 10 eine schnellere Reaktion, um beispielsweise durch entsprechende Maßnahmen eine gefährliche Situation zu entschärfen. Dies ist besonders wichtig bei einem Videosensor 2.2, der nur ein Monobild liefert, da die Erkennung eines Objekts in dem Zentralgebiet des Erfassungsbereichs, zum Beispiel aufgrund fehlender Flussinformationen (optischer Fluss), sehr schwierig ist. Praktische Untersuchungen haben gezeigt, dass eine Übernahme von Daten des Radarsensors 2.1 in die zu verifizierenden Objekte des Videosensors 2.2 in dem Erfassungsbereich E1 (MOV) sehr sinnvoll ist. Alternativ kann eine Auswahl der von beiden Sensoren 2.1,2.2 gelieferten Daten getroffen werden, um nur die jeweils plausibleren oder zuverlässigeren Daten zu übernehmen. Wie in Figur 2 dargestellt, ist der Erfassungsbereich E2 des Videosensors 2.2 üblicherweise wesentlich größer als der Erfassungsbereich E1 des Radarsensors 2.1. In dem außerhalb des Überlappungsbereichs E12 liegenden Erfassungsbereich E2 des Videosensors 2.2 kann eine Objektdetektion ausschließlich mit dem Videosensor 2.2 stattfinden, da dort Objekte mit dem Radarsensor 2.1 nicht erfassbar sind. Eines der größten Probleme bei der Auswertung der mittels eines Monosensors in den Erfassungsbereichen E1,E2 erfassten Videodaten ist die Erfassung von Zustandsdaten der Objekte, wie insbesondere Entfernung und Geschwindigkeit, die auf der Basis von durch Monosensoren gewonnenen Videodaten nur sehr ungenau geschätzt werden können. Vor allem bei weiter entfernten Objekten erschweren Nickbewegungen des Fahrzeugs 1 und die begrenzte Auflösung des Videosensors 2.2 die Ermittlung dieser Größen. Bisher konnte in dem außerhalb des Überlappungsbereich E12 liegenden Erfassungsbereich E2 des Videosensors 2.2 die Qualität dieser Daten, also z.B. die des Objekts 5, auch nicht durch Messungen des Radarsensors 2.1 verbessert werden, da dessen Erfassungsbereich E1 wesentlich enger ist und somit das Objekt 5 nicht erfasst. Hier setzt nun die erfinderische Lösung an. Die Erfindung geht dabei von der Erkenntnis aus, dass in dem Überlappungsbereich E12 durch Messung der Entfernung eines Objekts 4 mit dem Radarsensor 2.1 eine Entfernungs- oder Tiefeninformation ermittelbar ist, die auf Objekte in dem außerhalb des Überlappungsbereichs E12 liegenden Erfassungsbereich E2 des Videosensors 2.2 übertragbar ist. Ein wesentlicher Vorteil ist die viel genauere Schätzung von Zuständen der Objekterkennung der in dem Erfassungsbereich E2 liegenden Objekte (also zum Beispiel Objekt 5 in Figur 3 und Figur 4). Zugleich ist aber auch eine verbesserte Oberflächenschätzung möglich, die die Schätzung von Objektdaten in dem Überlappungsbereich E12 stabilisiert, und auf diese Weise, beispielsweise, die Schätzung des Verlaufs von Fahrbahnmarkierungen deutlich verbessert. Im Folgenden wird die Erfassung von Objekten, bzw. die Zuordnung von Eigenschaften zu diesen Objekten, mittels der Erfindung unter Bezug auf Figur 2 bis Figur 12, weiter erläutert. Es werde angenommen, dass von dem Radarsensor 2.1 ein in seinem Erfassungsbereich E1 liegendes Objekt 4 erfasst wurde (Schritt 50 in Figur 12). Dasselbe Objekt 4 wird zugleich auch von dem Videosensor 2.2 erfasst, da das Objekt 4 ebenfalls in seinem Erfassungsbereich E2 liegt (Schritt 50 in Figur 12). Somit wird die Existenz eines Objekts 4 in dem Überlappungsbereich E12 der Erfassungsbereiche E1, E2 bestätigt. In einem folgenden Schritt 51 (Figur 12) wird dann mittels des Radarsensors 2.1 die Entfernung dxRef des von den Sensoren 2.1 und 2.2 erfassten Objekts 4 sehr genau gemessen. Aus den Daten der Sensoren 2.1 und 2.2 wird nun ein aus einzelnen Bildpunkten bestehendes Abbild des Fahrzeugumfelds erzeugt, das optional auf einem Display 6 (Figur 1), beispielsweise einem Monitor, darstellbar ist. Dem Fahrer steht somit eine auf den Daten der Sensoren 2.1,2.2 beruhende visuelle Darstellung des Fahrzeugumfelds zur Verfügung. Wie bereits erwähnt, werden jedoch aus diesen Messwerten auch Steuersignale für weitere Systeme des Fahrzeugs 1 erzeugt. Üblicherweise sind die das Umfeld des Fahrzeugs 1 abbildenden Bildpunkte (Pixel) in regelmäßigen Zeilen und Spalten angeordnet. Ein erfasstes Objekt wird als Muster von Pixeln dargestellt, das in dieser Abbildung eine bestimmte Lage einnimmt. Nun werden ein derartiges Muster und ggf. die Lage dieses Musters oder auch charakteristische Bereiche des Objekts 4, wie beispielsweise eine leicht erkennbare, die untere Position des Objekts repräsentierende Kantenstruktur, einer Zeile des Bildes, beispielsweise der Bildzeile byRef (Figur 3), zugeordnet. Unter Berücksichtigung der Eigenschaften der Abbildungsoptik des Videosensors 2.2 und der Perspektive kann nun jeder Bildzeile des Displays ein Abstand zugeordnet werden (Schritt 52 in Figur 12). Dieser Prozess kann zweckmäßig in zwei Schritten durchgeführt werden. Zunächst werden Linsenfehler der Abbildungsoptik korrigiert (Rektifizierung). Da üblicherweise optische Systeme mit Weitwinkelcharakteristik eingesetzt werden, kommt es häufig, wie beispielhaft in Figur 5 dargestellt, zu kissenförmigen Verzerrungen. Figur 5 zeigt die Abbildung 4' eines mit einem Weitwinkelobjektiv aufgenommenen Objekts 4, das, in der Realität von im Wesentlichen geraden Linien begrenzt ist. Die Abbildung 4' des Objekts 4 lässt nun aber gekrümmte Berandungslinien des Objekts erkennen. Auch die Abbildungen 8.1', 8.2' von in der Realität im Wesentlichen gerade verlaufenden Fahrbahnmarkierungen 8.1,8.2 sind, infolge der Abbildungsfehler der Optik, in Figur 5 gekrümmt dargestellt. Durch einen Rektifizierungsprozess werden die Abbildungsfehler des optischen Systems kompensiert, so dass man, wie in Figur 6 dargestellt, eine der Realität entsprechende Darstellung des Objekts 4 und der Fahrbahnmarkierungen 8.1, 8.2 erhält. In einem zweiten Schritt wird dann jeder Bildzeile ein Abstand zugeordnet. Dies wird, anhand eines einfachen Modells einer Lochkamera unter Bezug auf die Darstellung in Figur 7 erläutert. Mit 2.2 ist ein Videosensor bezeichnet, der einen Bildsensor BS umfasst. Bei dem Videosensor 2.2 kann es sich beispielsweise um eine Kamera in CCD- oder CMOS-Technik mit einem Bildsensor BS auf Halbleiterbasis handeln. Der Bildsensor BS umfasst matrixartig angeordnete punktförmige lichtempfindliche Bereiche (Pixel), auf die Objekte 4, 5 aus dem Umfeld des Fahrzeugs 1 (Figur 1) abgebildet werden. Die Abbildung erfolgt durch eine kleine Öffnung 2.3 (Modell einer Lochkamera) in dem Gehäuse des Videosensors 2.2. Mit Bezugsziffer 9 ist die Horizontlinie bezeichnet. Die Unterkante des Objekts 5 werde auf die Zeile Z1 des Bildsensors BS abgebildet. Die Unterkante des Objekts 4 werde auf die Zeile Z2 des Bildsensors BS abgebildet. Eine im Wesentlichen ebene Fahrbahnoberfläche vorausgesetzt, lässt sich der Abstand der Objekte 4,5 und ihre Zuordnung zu Zeilen Z1, Z2 des Bildsensors BS mit einfachen trigonometrischen Beziehungen berechnen. Jeder Zeile des Bildsensors BS kann somit ein Abstandswert zugeordnet werden. Auf diese Weise findet praktisch eine Skalierung der Zeilen des Bildes hinsichtlich zugeordneter Entfernungswerte statt. Erfindungsgemäß wird nun ein solchermaßen ermittelter Entfernungswert auf lediglich von dem Videosensor 2.2 erfasste Objekte übertragen. Beispielsweise werde von dem Videosensor 2.2 in dem Erfassungsbereich E2 des Videosensors 2.2 außerhalb des Überlappungsbereichs E12 ein Objekt 5 detektiert (Schritt 53 in Figur 12). Diesem Objekt 5 wird nun eine Entfernung oder ein Abstand dxTop (Figur 4 und Schritt 54 in Figur 5), indem eine charakteristische Struktur des Objekts 5, beispielsweise seine Unterkante 5.1 (Fig.3) einer Bildzeile byTop zugeordnet wird (Schritt 52 in Figur 12), die wiederum einem bestimmten Abstand dxTop (Figur 4) entspricht. Somit kann aus der relativen topologischen Lage einer Zeile des Objekts 5 durch Übertragung der in dem Überlappungsbereich E12 gewonnenen Referenzmessung der Entfernung des Objekts 4, der Abstand des Objekts 5 in dem Erfassungsbereich E2 mit relativ hoher Güte bestimmt werden.

Da mittels der Erfindung die Entfernung von Objekten vergleichsweise genau bestimmbar ist, auch wenn diese nicht direkt gemessen werden kann, weil die Objekte beispielsweise außerhalb des Erfassungsbereichs E1 des Radarsensors 2.1 liegen, können vorteilhaft wichtige Klassifikationsmerkmale von Objekten abgeleitet werden. So kann beispielsweise festgestellt werden, ob ein Objekt vor einem zweiten Objekt liegt, also entfernungsmäßig näher an dem Fahrzeug 1.

Aus dxRef/byRef kann weiterhin die Horizontlinie 9 bestimmt werden. Diese geht stabilisierend in die Erkennung der Fahrbahnmarkierungen ein. Die Horizontlinie 9 liegt im Wesentlichen parallel zu einer im Idealfall als eben angenommenen Fahrbahnoberfläche 9.1. Sie ist damit lediglich ein Spezialfall der zuvor beschriebenen perspektivischen Betrachtung. Ist die Lage des Horizonts hinreichend genau bekannt, können wiederum vorteilhaft Fehler kompensiert werden, die durch Nickbewegungen des Fahrzeugs 1 hervorgerufen werden. Nickbewegungen des Fahrzeugs 1 haben eine Auswirkung auf die relative Zeilenlage eines Objekts. Umgekehrt kann daher eine Änderung der relativen Zeilenlage eines hinsichtlich seiner Entfernung bestimmten Objekts vorteilhaft für die Erkennung einer Nickbewegung des Fahrzeugs 1 herangezogen werden. Die Erkennung der Nickbewegung ist Voraussetzung für eine Stabilisierung eines mit einem entsprechenden Regelungssystem ausgestatteten Fahrzeugs. Bei Kenntnis der Lage des Horizonts können Fahrbahnmarkierungen auch mit höherer Güte erkannt werden. Dies wird im Folgenden unter Bezug auf Figur 8 und Figur 9 erläutert. In der in Figur 8 dargestellten Abbildung des Fahrzeugumfelds liegt die Horizontlinie 9 relativ tief. Die Abbildungen 8.1', 8.2' der Fahrbahnmarkierungen 8.1, 8.2 zeigen einen gekrümmten Verlauf. Hieraus kann abgeleitet werden, dass die Fahrbahnmarkierungen 8.1,8.2 auch in der Realität gekrümmt verlaufen, weil zum Beispiel eine Verengung der Fahrspur vorliegt. In Figur 9 liegt die Horizontlinie 9 relativ hoch in der Abbildung des Fahrzeugumfelds. Die Abbildungen 8.1', 8.2' der Fahrbahnmarkierungen 8.1,8.2 verlaufen ebenfalls gekrümmt und erwecken in der Abbildung den Eindruck, dass sie "abtauchen". Hieraus kann abgeleitet werden, dass die Fahrbahnmarkierungen 8.1, 8.2 in der Realität vermutlich tatsächlich parallel verlaufen und dass das Fahrzeug 1 sich tatsächlich einer Kuppe nähert. Wie aus der Darstellung in Figur 10 hervorgeht, führen Nickbewegungen des Fahrzeugs 1 und/oder Krümmungen der Fahrbahnoberfläche 9 dazu, dass in unterschiedlicher Entfernung befindliche Objekte 4, 5 in der gleichen Bildzeile, beispielsweise in der Zeile Z1 der Abbildung abgebildet werden. Mit den Bezugsziffern 9.1 und 9.1' sind die Fahrbahnoberflächen bezeichnet, auf denen sich die Objekte 4, 5 bewegen. Aus nicht plausiblen Veränderungen der Lage der Objekte 4,5 kann daher auf Nickbewegungen des Fahrzeugs 1 geschlossen werden. Das Fahrerassistenzsystem kann daher auch vorteilhaft als Nicksensor eingesetzt werden. Vorteilhaft kann weiterhin anhand der relativen Zeilenlage seiner Abbildung auch die Entfernung eines Hindernisses in dem Umfeld des Fahrzeugs 1 bestimmt werden, das nicht ohne weiteres mittels eines Radarsensors 2.1 erfassbar ist. Hierbei kann es sich beispielsweise um Tiere und Personen oder andere Gegenstände auf der Fahrbahn handeln, die mangels hinreichender Reflexion von Radarsignalen von dem Radarsensor 2.1 nicht oder nur unzureichend erfassbar sind.

Weiterhin sind in der Praxis Objekte in dem Umfeld des Fahrzeugs 1, die sich aus Sicht des Fahrzeugs 1, bzw. aus Sicht der Sensoren, überdecken, mit einem Videosensor 2.2 nur schwer erkennbar. Häufig ist die Erkennung solcher Objekte daher mit Fehlern behaftet. Wie in Figur 11 dargestellt, kann auch hier das erfindungsgemäß ausgestaltete Fahrerassistenzsystem vorteilhaft Abhilfe schaffen. Mit dem Radarsensor 2.1 ist es nämlich durchaus möglich, die Entfernungen auch verdeckt angeordneter Objekte 4, 5 in dem Umfeld des Fahrzeugs 1 zu messen. Aus Sicht des auf dem Fahrzeug 1 angeordneten Radarsensors 2.1 verdeckt das Objekt 5, bei dem es sich beispielsweise um einen NKW handelt, einen vor dem NKW fahrenden PKW (Objekt 4). Die Radarssignale breiten sich nämlich auch unter dem Objekt 5 weiter aus und erfassen somit auch noch den vor diesem fahrenden PKW. Der Radarsensor 2.1 stellt somit zwei Entfernungsangaben aus dem gleichen Azimut bereit. Dieser Sachverhalt kann dem Videosensor 2.2 mitgeteilt werden. In den Videosignalen kann somit gezielt nach den verdeckten Objekten gesucht werden.

## Patentansprüche

1. Fahrerassistenzsystem (10) mit mindestens zwei Umfeldsensoren (2.1, 2.2), deren Erfassungsbereiche (E1, E2) sich höchstens teilweise überlappen,
wobei mittels des ersten Umfeldsensors (2.1) die Bestimmung von Entfernungen von Objekten (4, 5) in seinem Erfassungsbereich (E1) möglich ist und wobei aus den Daten der Umfeldsensoren (2.1, 2.2) aus in Spalten und Zeilen angeordneten Bildpunkten bestehende Abbildungen des Fahrzeugumfelds ableitbar sind, **gekennzeichnet durch** eine Einrichtung (3, 6), **durch** die mittels des ersten Umfeldsensors (2.1) bestimmte Entfernungswerte den Zeilen der Abbilder zugeordnet werden, derart dass aus der relativen Zeilenlage eines von dem zweiten Umfeldsensor (2.2) außerhalb des Überlappungsbereichs (E12) erfassten Objekts (5) dessen Entfernung bestimmt wird.

2. Fahrerassistenzsystem (10) nach Anspruch 1, **dadurch gekennzeichnet, dass** der erste Umfeldsensor (2.1) ein Radarsensor und der zweite Umfeldsensor (2.2) ein Videosensor ist.

3. Fahrerassistenzsystem nach einem der vorhergehenden Ansprüche, **gekennzeichnet durch** seine Verwendung als Nicksensor.

4. Fahrerassistenzsystem nach einem der vorhergehenden Ansprüche, **gekennzeichnet durch** seine Anwendung als Entfernungsdetektor für Radarsignale schlecht reflektierende Hindernisse, wie beispielsweise Tiere und/oder Personen.

5. Verfahren für die Bestimmung des Objektabstands/der Entfernung eines Objekts für ein mindestens einen Radarsensor (2.1) und mindestens einen Videosensor (2.2) umfassendes, Abbildungen des Fahrzeugumfelds aus in Spalten und Zeilen angeordneten Bildpunkten erzeugendes Fahrerassistenzsystem (10), bei dem sich der Erfassungsbereich (E1) des mindestens einen Radarsensors (2.1) und der Erfassungsbereich (E2) des mindestens einen Videosensors (2.2) höchstens teilweise überlappen,
wobei in einem Überlappungsbereich (E12) der Erfassungsbereiche (E1, E2) der Sensoren (2.1, 2-2) mindestens ein Objekt (4) erfasst und seine Entfernung (dxRef) mit dem Radarsensor (2.1) bestimmt wird, **dadurch gekennzeichnet, dass** ein Muster des abgebildeten Objekts und/oder die Lage dieses Musters in der Abbildung oder charakteristische Objektstrukturen des erfassten Objekts (4) einer Bildzeile (byRef) zugeordnet werden, und dass vermittels der hinsichtlich der Entfernungswerte skalierten Bildzeilen aus der relativen Zeilenlage die Entfernung der von dem Videosensor (2.2) außerhalb des Überlappungsbereichs (E12) erfassten Objekte (5) bestimmt wird.

6. Verfahren nach Anspruch 5, **dadurch gekennzeichnet, dass** als charakteristische Struktur des Objekts (4) eine Kante (4.1) des Objekts (4) verwendet wird.

7. Verfahren nach einem der vorhergehenden Ansprüche, **dadurch gekennzeichnet, dass** für die Bestimmung der Entfernung (dxTop) des von dem Videosensor (2.2) außerhalb des Überlappungsbereichs (E12) erfassten Objekts (5) die untere Position (z.B. untere Kante) des erkannten Objekts (5) ausgewählt wird.

8. Verfahren nach einem der vorhergehenden Ansprüche, **dadurch gekennzeichnet, dass** durch Radarmessung mittels des Radarsensors (2.1) und Übergabe der Messwerte an den Videosensor (2.2) auch verdeckt angeordnete Objekte (4,5) von dem Videosensor (2.2) erfasst werden.

## Claims

1. Driver assistance system (10) having at least two surroundings sensors (2.1, 2.2) whose sensing ranges (E1, E2) overlap at most partially, wherein it is possible to determine distances from objects (4, 5) in its sensing range (E1) by means of the first surrounding sensor (2.1), and wherein images of the vehicle's surroundings composed of pixels arranged in columns and rows can be derived from the data of the surroundings sensors (2.1, 2.2), **characterized by** a device (3, 6) which assigns distance values determined by means of the first surroundings sensor (2.1) to the lines of the images, in such a way that the distance from an object (5) is determined from the relative row position of said object (5) which has been sensed by the second surroundings sensor (2.2) outside the overlapping region (E12).

2. Driver assistance system (10) according to Claim 1, **characterized in that** the first surroundings sensor (2.1) is a radar sensor, and the second surroundings sensor (2.2) is a video sensor.

3. Driver assistance system according to one of the preceding claims, **characterized by** its use as a pitching sensor.

4. Driver assistance system according to one of the preceding claims, **characterized by** its application as a distance detector for radar signals of obstacles with poor reflectance, for example animals and/or persons.

5. Method for determining the distance from an object for a vehicle assistance system (10) which comprises at least one radar sensor (2.1) and at least one video sensor (2.2) and which generates images of the vehicle surroundings from pixels arranged in columns and rows, in which method the sensing range (E1) of the at least one radar sensor (2.1) and the sensing range (E2) of the at least one video sensor (2.2) overlap at most partially, wherein at least one object (4) is sensed in an overlapping region (E12) of the sensing ranges (E1, E2) of the sensors (2.1, 2.2), and its distance (dxRef) is determined with the radar sensor (2.1), **characterized in that** a pattern of the captured object and/or the position of this pattern in the image or characteristic object structures of the sensed object (4) are assigned to an image row (byRef), and **in that** the distance of the objects (5) sensed by the video sensor (2.2) outside the overlapping region (E12) is determined from the relative row position by means of the image rows which are scaled with respect to the distance values.

6. Method according to Claim 5, **characterized in that** an edge (4.1) of the object (4) is used as a characteristic structure of the object (4).

7. Method according to one of the preceding claims, **characterized in that** the lower position (for example lower edge) of the detected object (5) is selected for the determination of the distance (dxTop) of the object (5) sensed by the video sensor (2.2) outside the overlapping region (E12).

8. Method according to one of the preceding claims, **characterized in that** even objects (4, 5) which are arranged in a concealed fashion are sensed by the video sensor (2.2) by radar measurement by means of the radar sensor (2.1) and transmission of the measured values to the video sensor (2.2).

## Revendications

1. Système d'assistance au conducteur (10) comprenant au moins deux détecteurs d'environnement (2.1, 2.2) dont les zones de détection (E1, E2) se chevauchent tout au plus partiellement, le premier détecteur d'environnement (2.1) permettant de déterminer les distances d'objets (4, 5) dans sa zone de détection (E1) et des représentations de l'environnement du véhicule composées de pixels disposés en colonnes et en lignes pouvant être déduites des données des détecteurs d'environnement (2.1, 2.2), **caractérisé par** un dispositif (3, 6) par le biais duquel certaines valeurs de distance sont associées aux lignes des images au moyen du premier détecteur d'environnement (2.1) de telle sorte que la distance d'un objet (5) détecté par le deuxième détecteur d'environnement (2.2) en-dehors de la zone de chevauchement (E12) soit déterminée à partir de la position relative de la ligne.

2. Système d'assistance au conducteur (10) selon la revendication 1, **caractérisé en ce que** le premier détecteur d'environnement (2.1) est un capteur radar et le deuxième détecteur d'environnement (2.2) est un capteur vidéo.

3. Système d'assistance au conducteur selon l'une des revendications précédentes, **caractérisé par** son utilisation en tant que détecteur de tangage.

4. Système d'assistance au conducteur selon l'une des revendications précédentes, **caractérisé par** son utilisation en tant que détecteur de distance pour des obstacles qui réfléchissent mal les signaux radar, comme par exemple les animaux et/ou les personnes.

5. Procédé pour déterminer l'écart/la distance d'un objet pour au moins un capteur radar (2.1) et au moins un capteur vidéo (2.2), comprenant un système d'assistance au conducteur (10) qui génère des représentations de l'environnement du véhicule à partir de pixels disposés en colonnes et en lignes, avec lequel la zone de détection (E1) de l'au moins un capteur radar (2.1) et la zone de détection (E2) de l'au moins un capteur vidéo (2.2) se chevauchent tout au plus partiellement, au moins un objet (4) étant détecté dans une zone de chevauchement (E12) des zones de détection (E1, E2) des capteurs (2.1, 2.2) et sa distance (dxRef) étant déterminée avec le capteur radar (2.1), **caractérisé en ce qu'**un modèle de l'objet représenté et/ou la position de ce modèle dans la représentation ou encore des structures d'objet caractéristiques de l'objet (4) détecté sont associés à une ligne d'image (byRef) et que la distance des objets (5) détectés par le capteur vidéo (2.2) en-dehors de la zone de chevauchement (E12) est déterminée à partir de la position relative de la ligne au moyen des lignes d'image échelonnées du point de vue des valeurs de la distance.

6. Procédé selon la revendication 5, **caractérisé en ce que** la structure caractéristique utilisée de l'objet (4) est un bord (4.1) de l'objet (4).

7. Procédé selon l'une des revendications précédentes**, caractérisé en ce que** la position la plus basse (par exemple le bord inférieur) de l'objet détecté (5) est choisie pour déterminer la distance (dxTop) de l'objet (5) détecté par le capteur vidéo (2.2) en-dehors de la zone de chevauchement (E12).

8. Procédé selon l'une des revendications précédentes, **caractérisé en ce que** les objets masqués (4, 5) sont eux aussi détectés par le capteur vidéo (2.2) par une mesure radar au moyen du capteur radar (2.1) et un transfert des valeurs mesurées au capteur vidéo (2.2).
